# EUROPÄISCHE PATENTSCHRIFT

(11) **EP 0 812 390 B1**
(45) Veröffentlichungstag und Bekanntmachung des Hinweises auf die Patenterteilung: **03.04.2002**
(21) Anmeldenummer: 96933318.6
(22) Anmeldetag: 23.08.1996
(51) Int. Cl.: F02M 59/34, F02M 59/46

(54) **SYSTEM ZUR KRAFTSTOFFHOCHDRUCKERZEUGUNG FÜR EIN IN BRENNKRAFTMASCHINEN EINGESETZTES KRAFTSTOFFEINSPRITZSYSTEM**
SYSTEM FOR HIGH-PRESSURE PRODUCTION FOR A FUEL INJECTION SYSTEM FITTED IN INTERNAL COMBUSTION ENGINES
SYSTEME DE PRODUCTION DE HAUTE PRESSION POUR SYSTEME D'INJECTION DE CARBURANT MONTE DANS UN MOTEUR A COMBUSTION INTERNE

(30) Priorität: 29.12.1995 DE 19549108
(43) Veröffentlichungstag der Anmeldung: 17.12.1997
(73) Patentinhaber: ROBERT BOSCH GMBH, 70442 Stuttgart (DE)
(72) Erfinder: KELLNER, Andreas, D-71732 Tamm (DE); SCHUBERT, Peter, D-74211 Leingarten (DE)
(86) Internationale Anmeldenummer: DE9601564
(87) Internationale Veröffentlichungsnummer: WO9724526

(56) Entgegenhaltungen:
- EP-A- 0 138 730
- EP-A- 0 175 895
- EP-A- 0 270 720
- WO-A-90/12207
- WO-A-93/18327
- FR-A- 890 012
- GB-A- 2 115 907

## Beschreibung

### Stand der Technik

Die Erfindung geht von einem System zur Kraftstoffhochdruckerzeugung für ein in Brennkraftmaschinen eingesetztes Kraftstoffeinspritzsystem nach dem Oberbegriff des Anspruchs 1 aus.

Ein derartiges System ist aus der EP 0 270 720 A1 bekannt. Dort wird zum einen eine einer Niederdruckpumpe nachgeschaltete Hochdruckpumpe beschrieben und zum anderen eine Steuerung aus mehreren hydraulischen Ventilen. Die Ventile dienen dem Aufteilen des von der Niederdruckpumpe gelieferten Volumenstroms in einen der Hochdruckpumpe zuzuführenden Arbeitsstrom und einen in einen Kraftstofftank zu entlastenden Reststrom. Zu den Ventilen gehört mindestens ein, in einer Rücklaufleitung integriertes, ggf. ferngesteuertes Druckbegrenzungsventil. Ferner sind in der Niederdruckleitung alternativ ein Drosselventil, ein ferngesteuert verstellbares Drosselventil, ein 2/2-Wegeventil und ein 3/3-Wegeventil eingebaut. Die beiden letztgenannten Ventile sind ebenfalls ferngesteuert.

Durch GB-A-2115907 ist es bekannt, zur Steuerung von Kraftstoffmengen ein von einem Elektromagneten betätigtes 3/2-Schiebeventil zu verwenden.

### Vorteile der Erfindung:

Bei dem Gegenstand der Erfindung, wie er im Anspruch 1 definiert ist, wird in der Niederdruckleitung zwischen der Niederdruck- und der Hochdruckpumpe ein elektrisch gesteuertes Stromregelventil verwendet. Das Ventil teilt den angelieferten Kraftstoffstrom auf. Ein Teil wird der Hochdruckpumpe zugefordert und der Restteil wird in den Rücklauf entlastet. Der Restteil kann bei Dieselmotoren u.a. zur Schmierung der Hochdruckpumpe eingesetzt werden.

Das Stromregelventil, ein elektromagnetisch betätigtes Längsschieberventil, wird direkt in die Niederdruckleitung eingebaut. Es hat einen geringen Raumbedarf, nur zwei unter Kraftstoffdruck stehende Anschlüsse und eine elektrische Ansteuerleitung. Auf diese Weise ist es einfach zu montieren und auszutauschen.

### Zeichnungen:

Weitere Einzelheiten der Erfindung ergeben sich aus der nachfolgenden Beschreibung einer schematisch dargestellten Ausführungsform:
- Figur 1:: Hydraulikschaltplan für ein System zur Kraftstoffhochdruckerzeugung mit einer symbolisch dargestellten Niederdruckpumpe und einer schematisch dargestellten Hochdruckpumpe und
- Figur 2:: Stromregelventil im Längsschnitt.

### Beschreibung des Ausführungsbeispiels:

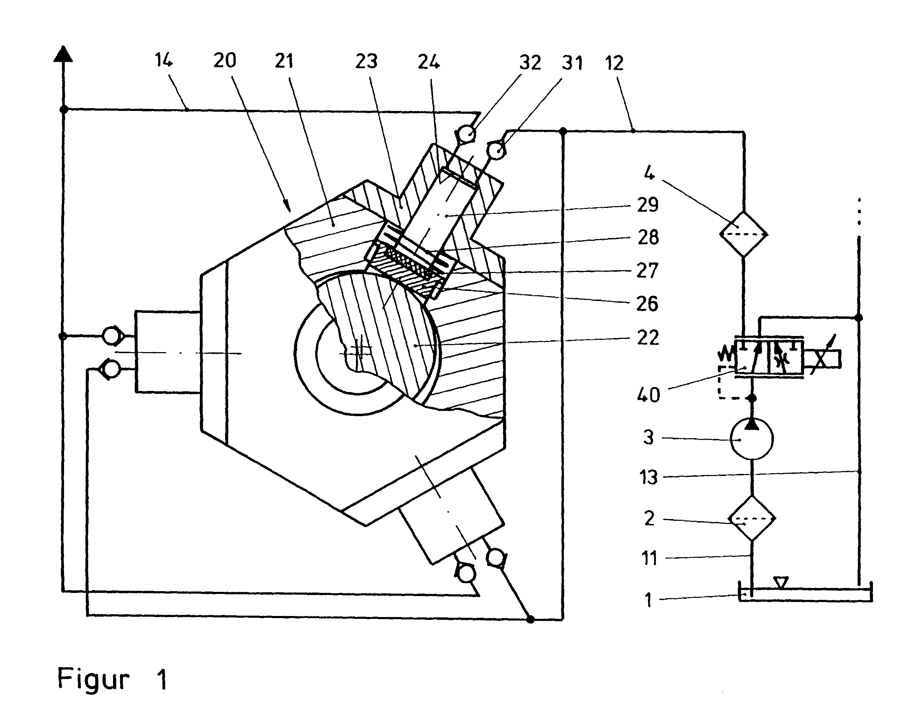

Figur 1 zeigt einige wesentliche Teile eines Systems zur Kraftstoffhochdruckerzeugung in Brennkraftmaschinen. Der unter Hochdruck stehende Kraftstoff wird einem nachgeschalteten Kraftstoffeinspritzsystem zugeführt.

Zur Kraftstoffhochdruckerzeugung wird der Kraftstoff mittels einer beispielsweise elektrisch angetriebenen Niederdruckpumpe (3) aus einem Kraftstofftank (1) angesaugt und über ein Stromregelventil (40) zu einer Hochdruckpumpe (20) und/oder in eine Rücklaufleitung (13) gefördert. In einer zwischen dem Kraftstofftank (1) und der Niederdruckpumpe (3) angeordneten Saugleitung (11) ist ein Filter (2) eingebaut. In einer zwischen dem Stromregelventil (40) und der Hochdruckpumpe (20) liegenden Niederdruckleitung (12) ist ein Feinfilter (4) integriert.

Die Niederdruckleitung (12) führt zu den Einlaßrückschlagventilen (31) der Hochdruckpumpe (20). Über diese Ventile, die an oder in der Hochdruckpumpe (20) angeordnet sind, gelangt der Kraftstoff in die Zylinderräume (24). Bei der dargestellten dreizylindrigen Hochdruckpumpe (20) bewegt sich in jedem Zylinderraum (24) ein Hochdruckkolben (29). Letzterer wird in einem Zylinder (23) geführt. Der Hochdruckkolben (29) wird über einen in einem Exzentergehäuse (21) gelagerten Exzenter (22) oder Nocken unter der Zwischenschaltung eines Zwischenkolbens (26) zumindest im Verdichtungshub bewegt. Dabei schiebt der Zwischenkolben (26) den Hochdruckkolben (29) vor sich her. Dabei wird die im Zylinderraum (24) vorhandene Kraftstoffmenge über ein Auslaßrückschlagventil (32) in eine Hochdruckleitung (14) gepreßt. über die Hochdruckleitung (14) wird der Kraftstoff in einen nicht dargestellten Kraftstoffhochdruckspeicher gefördert.

In der Ansaugphase, bzw. bei Abnahme des Exzenterhubs, wird der Zwischenkolben (26) mittels einer Druckfeder (28) in Richtung auf die Exzentergehäusemittellinie zubewegt. Der Hochdruckkolben (29) wird durch den über das Einlaßrückschlagventil (31) einströmenden Kraftstoff zurückgedrängt. Der Rückhub ist dabei abhängig von der über das Einlaßrückschlagventil (31) gelieferten Kraftstoffmenge. Benötigt die Brennkraftmaschine beispielsweise bei niedriger Teillast oder Leerlauf nur wenig Kraftstoff, so ist der Rückhub des Hochdruckkolbens (29) klein. Der Zwischenkolben (26) kommt beim nächsten Arbeitshub erst kurz vor dem oberen Totpunkt mit dem Hochdruckkolben (29) in Kontakt. Um die Wucht der Kollision zwischen den beiden Kolben (26) und (29) zu dämpfen, ist in der Oberseite des Zwischenkolbens (26) ein Dämpfungselement (27) eingebettet. Das Dämpfungselement (27) besteht beispielsweise aus einem gummielastischen Werkstoff. Auch eine hydraulische Dämpfung ist denkbar.

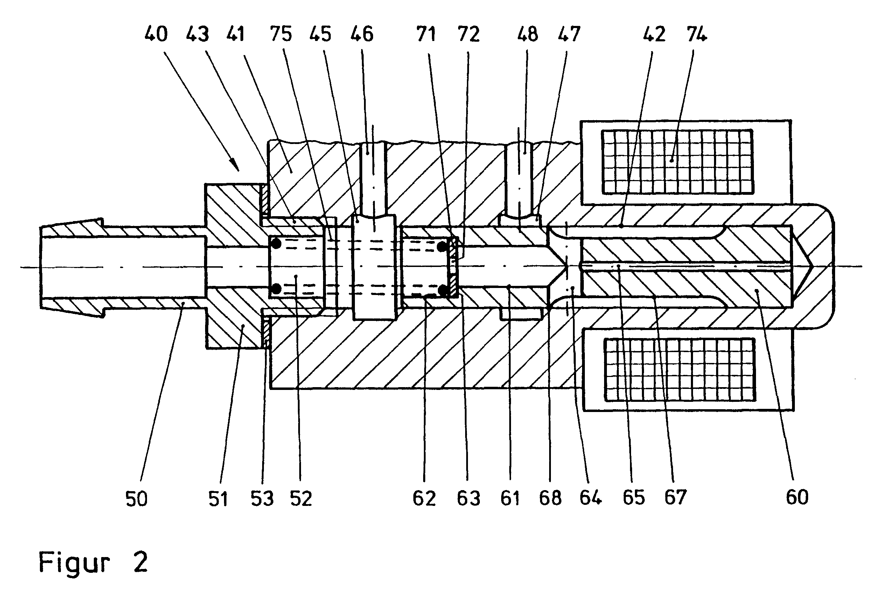

Der Kraftstoffstrom, der der Hochdruckpumpe (20) durch die Niederdruckpumpe (3) bereitgestellt wird, wird von einem Stromregelventil (40) gesteuert. Der Aufbau des Stromregelventils ist vereinfacht in Figur 2 dargestellt.

Das Stromregelventil (40) hat hier ein annähernd quaderförmiges Gehäuse (41) mit einer zentralen Schieberbohrung (42). Letztere ist als Sacklochbohrung ausgeführt, in der ein Längsschieber (60) dicht gleitend eingesetzt ist. Um den hinteren Bereich der Sacklochbohrung herum ist das Gehäuse (41) annähernd zylindrisch ausgeführt. Die zylindrische Außenfläche verläuft koaxial zur Schieberbohrung (42). Auf der Außenfläche sitzt ein elektromagnetischer Antrieb (74). Der Antrieb ist beispielsweise ein Proportionalmagnet.

Die Schieberbohrung (42) weist an ihrem offenen Ende, also links in Figur 2, ein Gewinde (43) auf, über das ein Anschlußstutzen (50) am Gehäuse (41) befestigt ist. Rechts neben dem Auslauf des Gewindes (43) befindet sich eine Ringnut (45), in die radial eine Rücklaufbohrung (46) mündet. Im mittleren Bereich der Schieberbohrung (42) ist eine zweite Ringnut (47) angeordnet, in die ebenfalls eine radial orientierte Bohrung (48) mündet.

Der Längsschieber (60) hat primär eine zylindrische Kontur. In seinem mittleren Bereich weist er eine Querbohrung (64) auf, die seine Mittellinie schneidet und deren Querschnitt in der Größenordnung der einzelnen Querschnitte der Bohrungen (46) und (48) liegt. Zu dieser Querbohrung (64) erstreckt sich von der linken Stirnseite her eine Stufenbohrung (61), deren beide Abschnitte konzentrisch zur Außenkontur des Längsschiebers (60) orientiert sind. Der erste Abschnitt (62), der an der linken Stirnseite beginnt, hat einen größeren Durchmesser als der zweite Abschnitt. Am Übergang zwischen den Abschnitten ist eine plane Schulter (63) ausgebildet, auf der eine Düsenscheibe (71) aufliegt. Die Düsenscheibe (71) hat eine zentrale Drosselbohrung (72). Sie wird auf der Schulter (63) mit Hilfe einer Schraubenfeder (75) gehalten, die sich am Anschlußstutzen (50) in einer mit dem Abschnitt (62) geometrisch vergleichbaren Ausnehmung (52) abstützt.

Zwischen der Querbohrung (64) und der rechten, planen Stirnseite des Längsschiebers (60) befindet sich eine zentrale Entlastungsbohrung (65) mit kleinem Durchmesser.

Die zylindrische Außenkontur des Längsschiebers (60) hat in einem Bereich rechts neben der Querbohrung (64) eine Taille (67) bzw. flache Ringnut. Die Querbohrung (64) mündet in die Taille (67). Der linke Rand der Taille (67) bildet eine Steuerkante (68), deren Abstand zur Ringnut (47) annähernd dem Abstand zwischen der linken Stirnfläche des Längsschiebers (60) und der Ringnut (45) entspricht. Die Länge der Taille (67) ist mindestens so lang, wie der maximale Hub des Längsschiebers (60).

In der Grundstellung des Stromregelventils (40) liegt der Längsschieber (60) am Grund der Schieberbohrung (42) an. Bei dem hier unbestromten Antrieb (74) hält die Kraft der Schraubenfeder (75) den Längsschieber (60) in dieser Position. Die Federkraft kann verändert werden, indem zwischen dem Bund (51) des Anschlußstutzens (50) und der linken Gehäusestirnfläche neben einem Dichtungsring (53) eine oder mehrere Distanzscheiben unterlegt werden.

über den Anschlußstutzen (50), der von der Niederdruckpumpe (3) gespeist wird, strömt Kraftstoff in das Innere des Gehäuses (41). Der Kraftstoff füllt neben dem Längsschieber (60) die gesamte Schieberbohrung (42) aus. Er fließt nahezu ungedrosselt über die Rücklaufbohrung (46) in die Rücklaufleitung (13), vgl. Figur 1. Da die die Taille (67) links begrenzende Steuerkante (68) rechts außerhalb der Ringnut (47) positioniert ist, wird die Förderbohrung (48) und die daran angeschlossene Niederdruckleitung (12), vgl. Figur 1, nicht mit Kraftstoff versorgt.

Mit der Bestromung des elektromagnetischen Antriebs (74) bewegt sich der Längsschieber (60) nach links. Sobald die Steuerkante (68) unter die Ringnut (47) gelangt, wird die Hochdruckpumpe (20) über die Förderbohrung (48) und die daran anschließende Niederdruckleitung (12) mit Kraftstoff beliefert. Gleichzeitig stellt sich am Längsschieber (60) ein neues Kräftegleichgewicht ein. Mit einem öffnen der Ringnut (47) fällt der Kraftstoffdruck im Längsschieber (60) rechts neben der Drosselscheibe (71) ab. Außerdem wird die weiter links liegende Ringnut (45) ca. um das Maß geschlossen, um das die Ringnut (47) öffnet. Auf die linke Stirnseite des Längsschiebers (60) wirkt nun die Summe aus der Kraft der Schraubenfeder (75) und der Kraft aufgrund der Druckdifferenz beidseits der Drosselscheibe (71). Dagegen wirkt die Kraft des elektromagnetischen Antriebs (74). Da die Federkraft und die hydraulische Kraft bereichsweise annähernd konstant sind, kann durch das Ändern der Magnetkraft, bzw. der Bestromung, der in die Niederdruckleitung (12) fließende Kraftstoffstrom variiert werden. Durch eine entsprechende Steuerung des elektromagnetischen Antriebs (74) kann die Hochdruckpumpe (20) mit einem konstanten Kraftstoffstrom versorgt werden, sofern dieser immer unter dem von der Niederdruckpumpe (3) geförderten Volumenstrom liegt. Der Reststrom gelangt über die Rücklaufbohrung (46) in den Rücklauf.

Bei maximaler Bestromung des elektromagnetischen Antriebs (74) bewegt sich der Längsschieber (60) so weit nach links, daß seine Außenkontur die Ringnut (45) vollständig abdeckt. Der gesamte Kraftstoffstrom wird über die Stufenbohrung (61), die Querbohrung (64), die Taille (67), die Ringnut (47) und die Förderbohrung (48) in die Niederdruckleitung (12) transportiert.

## Patentansprüche

1. System zur Kraftstoffhochdruckerzeugung für ein in Brennkraftmaschinen eingesetztes Kraftstoffeinspritzsystem, in dem über eine Niederdruckpumpe (3) aus einem Kraftstofftank (1) angesaugter Kraftstoff über eine Niederdruckleitung (12) und mindestens ein Ventil einer Hochdruckpumpe (20) zugeführt wird, wobei in der Niederdruckleitung (12) ein Stromregelventil (40) angeordnet ist, das elektrisch gesteuert oder geregelt den von der Niederdruckpumpe (3) gelieferten Kraftstoffstrom der Hochdruckpumpe (20) und/oder dem Rücklauf zuführt und einen von einem elektromagnetischen Antrieb (74) zumindest gegen eine Rückstellfeder (75) betätigten Längsschieber aufweist, **dadurch gekennzeichnet, dass** der Längsschieber (60) auf seiner gegenüber dem elektromagnetischen Antrieb (74) liegenden Stirnseite mit Niederdruck beaufschlagt ist und im Bereich seiner Stirnseite ein Drosselventil (72) aufweist, über das der Kraftstoff bei betätigtem Stromregelventil (40) in den zur Hochdruckpumpe (20) weiterführenden Abschnitt der Niederdruckleitung (12) strömt.

## Claims

1. System for producing high fuel pressure for a fuel injection system fitted in internal combustion engines, in which fuel drawn in from a fuel tank (1) by means of a low-pressure pump (3) is fed to a high-pressure pump (20) via a low-pressure line (12) and at least one valve, the low-pressure line (12) having arranged in it a pressure control valve (40) that feeds the fuel flow supplied by the low-pressure pump (3) to the high-pressure pump (20) and/or to the return under electrical open-loop or closed-loop control and has a longitudinal spool that is actuated at least against a return spring (75) by an electromagnetic drive (74), **characterized in that** the longitudinal spool (60) is acted upon by low pressure on its end opposite the electromagnetic drive (74) and, in the region of its end, has a throttle valve (72) via which, when the pressure control valve (40) is actuated, the fuel flows into the section of the low-pressure line (12) that leads on to the high-pressure pump (20).

## Revendications

1. Système pour fournir du carburant à haute pression pour un système d'injection de carburant d'un moteur thermique, selon lequel
- une pompe basse pression (3) aspire du carburant d'un réservoir à carburant (3) pour le fournir par une conduite basse pression (12) et au moins une soupape à une pompe à haute pression (20),
- la conduite basse pression (12) comporte une soupape de régulation de débit (40) commandée ou régulée électriquement pour fournir le flux de carburant de la pompe basse pression (3) à la pompe à haute pression (20) et/ou au retour ainsi qu'un tiroir actionné par un moyen d'entraînement électromagnétique (74) contre au moins un ressort de rappel (75),
**caractérisé en ce que**
le tiroir (60) reçoit la basse pression sur sa face opposée au moteur électromagnétique (74) et sa face frontale, comporte une soupape d'étranglement (72) par laquelle passe le carburant lorsque la soupape de régulation de débit (40) est actionnée, pour passer par la conduite basse pression (12) reliée à la pompe à haute pression (20).
